# DEMANDE DE BREVET EUROPEEN

(11) **EP 4 120 513 A1**
(43) Date de publication de la demande: **18.01.2023**
(21) Numéro de dépôt: 22181658.0
(22) Date de dépôt: 28.06.2022
(51) Int. Cl.: H02K 1/20, H02K 9/19, H02K 3/24

(54) **MACHINE ÉLECTRIQUE AVEC REFROIDISSEMENT DES TÊTES DE BOBINES**

(30) Priorité: 16.07.2021 FR 2107709
(71) Demandeur: IFP Energies nouvelles, 92500 Rueil-Malmaison (FR); EREM, 60130 Wavignies (FR)
(72) Inventeur: DIB, Wissam, 92852 RUEIL-MALMAISON CEDEX (FR); GROSJEAN, Paul, 92852 RUEIL-MALMAISON CEDEX (FR); MAIER, Paul, 60130 WAVIGNIES (FR); MAIER, Vincent, 60130 WAVIGNIES (FR)
(74) Mandataire: IFP Energies nouvelles

(57) **Abrégé**

La présente invention concerne une machine électrique comprenant un rotor (2) et un stator, un carter et deux flasques (7). Les deux flasques (7) sont positionnés chacun à une extrémité longitudinale du carter (20) (aussi appelé boîtier) et forment, avec le carter, une enveloppe extérieure de la machine électrique. Le stator comprend un corps de stator (1) et des bobines (22) avec des têtes de bobines (3). Les têtes de bobines (3) sont enrobées d'un matériau d'enrobage (4), tel qu'une résine, remplissant un espace annulaire entre le corps de stator (1) et un des deux flasques (7). De plus, la machine électrique comprend un circuit de refroidissement du stator au moyen de la circulation d'un fluide de refroidissement (6). En outre, le circuit de refroidissement du stator comprend des tubes (5) traversant le corps de stator (1) et le matériau d'enrobage (4) des têtes de bobines (3), les tubes (5) étant reliés entre eux par des canaux de liaison (8) de manière à ce que le circuit de refroidissement forme un serpentin autour du stator et des têtes de bobines (3).

## Description

### Domaine technique

La présente invention concerne le domaine des machines électriques et en particulier le refroidissement de ces machines électriques qui peuvent fonctionner en tant que moteur électrique ou en tant que générateur électrique. Les machines électriques de l'invention peuvent notamment être utilisées comme moteur électrique dans des applications de transport (automobile par exemple).

L'invention peut notamment être utilisée pour une machine électrique synchro-réluctante, assistée ou non d'aimants permanents, mais peut également être appliquée à d'autres types de machines électriques, comme des machines synchrones ou asynchrones.

Une machine électrique comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entraîner en rotation le rotor (fonctionnement en tant que moteur électrique). Le stator comprend généralement un corps de stator et des bobines qui entourent au moins partiellement le corps de stator.

Lors de leur fonctionnement, les machines électriques s'échauffent du fait des pertes électromagnétiques (pertes par effet Joule et pertes fer) et mécaniques. Cet échauffement nuit à leur fonctionnement et conduit à la dégradation de leurs performances. Par exemple, si le stator n'est pas refroidi (ou pas suffisamment refroidi), la température du bobinage augmente, ce qui peut entraîner une baisse de la conductivité électrique du cuivre constituant les bobines et une diminution de la durée de vie du bobinage. La résistance électrique du cuivre augmentant, il y a également une perte de rendement. Les divers composants électromagnétiques d'une machine électrique, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine, d'assurer une répétabilité de ses performances, d'allonger sa durée de vie et de limiter la maintenance.

La recherche d'un refroidissement performant est donc une préoccupation majeure pour les fabricants et les intégrateurs de machines électriques.

### Technique antérieure

Différents types de refroidissement existent, souvent adaptés à la puissance de la machine, parmi lesquels les systèmes de refroidissement par air, généralement d'efficacité moindre et parfois agressifs pour l'intérieur du moteur, les systèmes de refroidissement par liquide, par exemple par eau, notamment utilisés dès que les pertes sont importantes comme dans le cas des moteurs électriques, ou par huile. D'autres systèmes de refroidissement par hélium ou azote liquide peuvent être utilisés pour les machines électriques de centrales électriques. La demande de brevet FR 3 057 719 décrit notamment un système de refroidissement pour une machine électrique.

Bien que le refroidissement par air constitue une solution intéressante économiquement, comparativement aux autres systèmes de refroidissement, il présente généralement une efficacité moindre, et est ainsi souvent cantonné au refroidissement de machines électriques peu puissantes. C'est le cas par exemple dans les applications où le refroidissement par air est typiquement utilisé pour des moteurs électriques d'une puissance inférieure à 20 kW, lorsque la surface d'échange disponible est suffisante et l'air non pollué. Au-delà, un système de refroidissement par liquide est souvent mis en œuvre.

Dans le système de refroidissement conventionnel de moteurs électriques à liquide de refroidissement, le liquide de refroidissement est souvent inséré dans une « chemise » extérieure en contact avec le stator. Ainsi, le flux thermique transite par conduction du cuivre au stator puis par la chemise avant de terminer par convection dans le liquide de refroidissement. Cette solution refroidit bien le centre du stator et donc les encoches de cuivre mais a le désavantage que la source de refroidissement est assez éloignée des têtes de bobines situées aux extrémités du stator, les têtes de bobines étant libres dans l'air interne du moteur, l'air étant peu conducteur alors que les têtes de bobines sont le siège de l'échauffement le plus important du bobinage.

On connaît également des solutions avec de la résine enrobant les têtes de bobines. Par exemple, la demande de brevet DE 10 2012 221 325 concerne un refroidissement du stator avec les têtes de résines enrobées dans une résine. Toutefois, ce circuit de refroidissement ne permet pas un refroidissement efficace des têtes de bobines car l'extrémité longitudinale des têtes de bobines n'est pas refroidie. De plus, ce système de refroidissement est relativement complexe à mettre en place autour du stator.

La présente invention a pour objectif d'améliorer les performances de refroidissement du stator et notamment des têtes de bobines, tout en proposant un système de refroidissement simple à mettre en oeuvre industriellement et à un coût réduit.

### Résumé de l'invention

Pour atteindre l'objectif, l'invention concerne une machine électrique comprenant un rotor et un stator coaxiaux autour d'un axe longitudinal, un carter et deux flasques. Les deux flasques sont positionnés chacun à une extrémité longitudinale du carter (aussi appelé boîtier) et forment, avec le carter, une enveloppe extérieure de la machine électrique. Le stator entoure le rotor et le stator comprend un corps de stator et des bobines avec des têtes de bobines. Les têtes de bobines sont enrobées d'un matériau d'enrobage, tel qu'une résine, remplissant un espace annulaire entre le corps de stator et un des deux flasques. De plus, la machine électrique comprend un circuit de refroidissement du stator au moyen de la circulation d'un fluide de refroidissement. En outre, le circuit de refroidissement du stator comprend des tubes traversant longitudinalement le corps de stator et le matériau d'enrobage des têtes de bobines, les tubes étant reliés entre eux par des canaux de liaison, de préférence situés dans les flasques, de manière à ce que le circuit de refroidissement forme un serpentin autour du stator et des têtes de bobines.

Avantageusement, les tubes sont répartis régulièrement autour du stator, et de préférence le circuit de refroidissement du stator comprend entre 4 et 30 tubes dans le corps de stator.

De manière préférée, le corps de stator comprend des bossages s'étendant dans la direction longitudinale pour le passage desdits tubes à travers ledit corps de stator.

Selon un mode de réalisation de l'invention, les tubes sont frettés dans le corps de stator.

Selon une variante avantageuse de l'invention, le circuit de refroidissement comprend une seule entrée de fluide de refroidissement et une seule sortie de fluide de refroidissement.

De préférence, les canaux de liaison sont situés dans les flasques et la machine électrique comprend de préférence un moyen d'étanchéité au niveau de chaque liaison entre un tube et un canal de liaison dans les flasques, le moyen d'étanchéité comprenant de préférence un joint torique.

Selon une configuration de l'invention, chaque canal de liaison dans un flasque pour la liaison entre deux tubes comprend deux trous longitudinaux dans le prolongement de chacun desdits deux tubes et un conduit rectiligne passant par les deux extrémités des trous longitudinaux, les deux trous longitudinaux étant non débouchant.

De manière avantageuse, la machine électrique comprend un onduleur intégré et positionné sur le carter de la machine électrique.

Selon une configuration de l'invention, le corps de stator comprend un empilement de tôles.

De préférence, la machine électrique étant une machine synchro-réluctante, de préférence une machine synchro-réluctante assistée d'aimants permanents.

### Liste des figures

D'autres caractéristiques et avantages de la machine électrique selon l'invention, apparaîtront à la lecture de la description ci-après d'exemples non limitatifs de réalisations, en se référant aux figures annexées et décrites ci-après.
La figure 1 représente une vue en coupe d'un mode de réalisation de la machine électrique selon l'invention dans un plan comprenant l'axe longitudinal.
La figure 2 représente une vue en coupe d'un mode de réalisation d'une portion du rotor et du stator d'une machine électrique selon l'invention dans un plan orthogonal à l'axe longitudinal.
La figure 3 représente une vue en perspective d'un mode de réalisation de la machine électrique selon l'invention.
La figure 4 représente une vue en perspective d'un flasque de la machine électrique selon un mode de réalisation de l'invention.
La figure 5 représente une vue en transparence d'un flasque de la machine électrique selon un mode de réalisation de l'invention, dans un plan orthogonal à l'axe longitudinal.
La figure 6 représente une vue en perspective d'une machine électrique avec un onduleur intégré selon l'invention.
La figure 7 représente un exemple d'un circuit de refroidissement d'une machine électrique selon l'invention.
La figure 8 illustre les courbes d'évolution de la température des têtes de bobines, du couple et de l'intensité du courant au cours du temps sur un point stabilisé au couple maximal pendant 30 secondes pour une machine électrique selon l'invention.
La figure 9 illustre les courbes d'évolution de la température des têtes de bobines, de la puissance et de l'intensité du courant au cours du temps sur un point stabilisé à la puissance maximale pendant 30 secondes pour une machine électrique selon l'invention.

### Description des modes de réalisation

L'invention concerne une machine électrique comprenant un rotor, un stator, un carter et deux flasques. Le rotor et le stator sont coaxiaux autour d'un axe longitudinal, le rotor étant mobile en rotation autour de l'axe longitudinal et le stator étant fixe. Un arbre peut transmettre un couple au rotor, la machine fonctionnant alors en tant que générateur électrique. A l'inverse (et potentiellement avec la même machine électrique), le stator peut entraîner le rotor en rotation, lui-même entraînant par exemple un arbre, la machine électrique fonctionnant alors en tant que moteur électrique. Les deux flasques sont positionnés chacun à une extrémité longitudinale du carter formant ainsi, avec le carter, une enveloppe extérieure de la machine électrique. Le stator et le rotor sont positionnés au sein de cette enveloppe extérieure, qui sert de protection. De plus, le stator entoure le rotor, le stator comprenant un corps de stator et des bobines avec des têtes de bobines dépassant du corps de stator à chaque extrémité longitudinale du corps de stator. Ainsi, chaque bobine a deux têtes de bobines, une à chaque extrémité longitudinale du corps de stator. Selon l'invention, les têtes de bobines sont enrobées d'un matériau d'enrobage qui remplit un espace annulaire entre le corps de stator et un flasque. Ainsi, l'espace entre chaque flasque et le corps de stator est rempli du matériau d'enrobage pour enrober toutes les têtes de bobines, à chaque extrémité longitudinale. Toutes les têtes de bobines sont donc enrobées. Le matériau d'enrobage est un isolant électrique et avantageusement conducteur thermique. De ce fait, la conduction thermique entre les têtes de bobines et les flasques est améliorée, ce qui favorise le refroidissement de la machine par rapport à une solution où les têtes de bobines sont entourées seulement d'air qui joue le rôle d'isolant thermique, ce qui nuit au refroidissement de la machine électrique. De plus, la machine électrique comprend un circuit de refroidissement du stator au moyen de la circulation d'un fluide de refroidissement. En effet, un fluide de refroidissement, tel que de l'eau ou de l'eau glycolée, peut circuler dans le circuit de refroidissement et ainsi refroidir le stator. La température du fluide de refroidissement en entrée peut être inférieure à 80°C, de préférence inférieure à 70°C.

En outre, le circuit de refroidissement du stator comprend des tubes traversant longitudinalement le corps de stator et le matériau d'enrobage des têtes de bobines des deux côtés du stator (à chaque extrémité longitudinale du corps de stator). Dans le matériau d'enrobage, les tubes traversent longitudinalement le matériau d'enrobage sur au moins la longueur longitudinale des têtes de bobines (en d'autres termes, les tubes peuvent ne pas traverser totalement le matériau d'enrobage). En revanche, les tubes traversent totalement le corps de stator d'une extrémité longitudinale à l'autre. Avantageusement, ces tubes sont droits, rectilignes et s'étendent dans la direction longitudinale. Ainsi, la fabrication de ces tubes est simple et peu onéreuse. De plus, comme ces tubes ne sont pas seulement disposés autour du corps du stator mais qu'ils traversent le corps de stator, la conduction thermique entre les tubes et le corps de stator favorise le refroidissement.

De plus, comme les tubes traversent également longitudinalement le matériau d'enrobage, les tubes sont au plus près des têtes de bobines sur toute la longueur longitudinale des têtes de bobines et ce à chaque extrémité longitudinale. Ainsi, l'efficacité du refroidissement est améliorée.

En outre, lorsque les tubes traversent longitudinalement totalement le matériau d'enrobage et comme le matériau d'enrobage est coincé entre le corps de stator et un des flasques, le tube vient en contact du flasque. De ce fait, le fluide de refroidissement rejoint le flasque permettant d'augmenter le refroidissement par le flasque, lui-même refroidi par la convection avec l'air ambiant. Pour encore améliorer le refroidissement thermique, des ailettes peuvent être mises en place sur les flasques pour augmenter la surface d'échange entre le flasque (entre chaque flasque) et l'air ambiant.

De plus, les tubes sont reliés entre eux, de préférence deux à deux, à une extrémité longitudinale (à une des deux extrémités longitudinales) par des canaux de liaison de manière à ce que le circuit de refroidissement forme un serpentin autour du stator et des têtes de bobines. Par exemple, les canaux de liaison peuvent être situés (usinés notamment) dans les flasques.

Par exemple, les canaux de liaison peuvent comprendre une portion située dans un plan orthogonal à l'axe longitudinal de la machine électrique et ils peuvent comprendre une partie (un conduit) qui s'étend d'une extrémité longitudinale d'un tube ou d'un trou longitudinal à une autre extrémité longitudinale (dans le même flasque) d'un autre tube ou d'un autre trou longitudinal. Cette partie (également appelée conduit) peut être rectiligne. Par ces canaux de liaison, le système de refroidissement passe au plus près de l'extrémité longitudinale des têtes de bobines, ce qui permet de refroidir efficacement le rotor. De plus la réalisation de ces canaux de liaison dans les flasques est simple de fabrication par usinage par exemple, et ne nécessite pas de mise en oeuvre complexe pour le montage de l'ensemble.

Les canaux de liaison rejoignant deux tubes peuvent être alternativement situés dans un flasque situé à une extrémité longitudinale puis dans le flasque opposé à l'autre extrémité longitudinale, de manière à pouvoir faire circuler le fluide de refroidissement dans les deux flasques, ce qui permet d'une part de refroidir de manière homogène les têtes de bobines des deux côtés (à chaque extrémité longitudinale) et d'autre part d'améliorer le refroidissement. En effet, en faisant circuler le fluide de refroidissement dans les flasques, la chaleur peut être plus facilement évacuée dans l'environnement extérieur, directement en contact avec le flasque.

Par exemple et de manière non limitative, les tubes situés successivement (directement sans être séparés par un autre tube) dans la direction circonférentielle de la machine électrique peuvent être reliés alternativement dans des canaux de liaison d'un flasque puis dans des canaux de liaison de l'autre flasque. Ainsi, on peut facilement former un serpentin.

Avantageusement, le circuit de refroidissement peut être réparti sur toute la circonférence de la machine électrique.

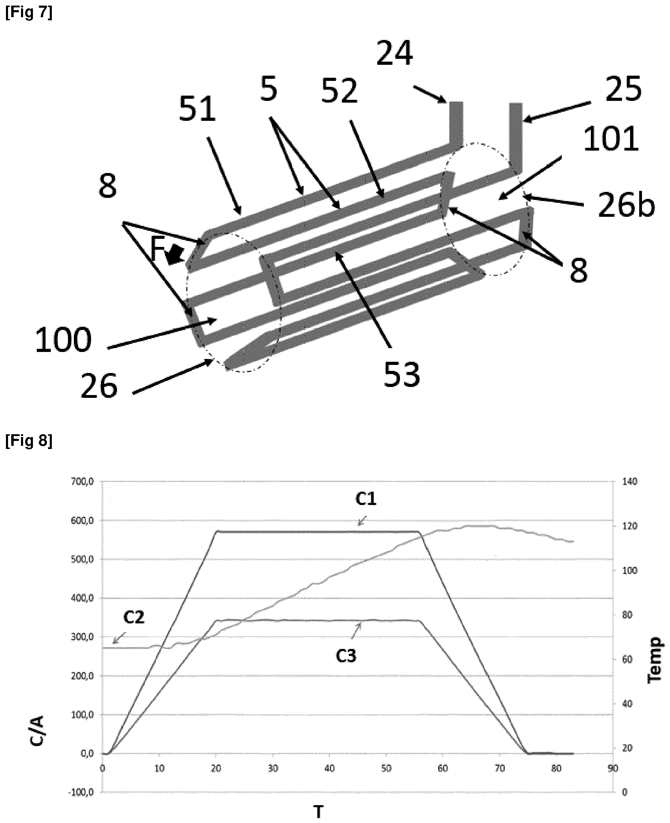

Pour ce faire, les canaux de liaison d'un flasque peuvent être décalés des canaux de liaison de l'autre flasque pour permettre une liaison alternative des tubes successifs dans un flasque puis dans l'autre. En d'autres termes, les canaux de liaison d'un flasque ne peuvent pas coïncider avec les canaux de liaison de l'autre flasque en vue de côté (dans un plan orthogonal à l'axe longitudinal). Par exemple, lorsque les tubes sont régulièrement répartis sur le pourtour du stator, les canaux de liaison d'un flasque peuvent être décalés des canaux de liaison de l'autre flasque d'un angle correspondant à l'angle d'espacement des tubes sur leur diamètre d'implantation. De plus, l'un des flasques peut comprendre moins de canaux de liaison que l'autre flasque, comme sur l'exemple de la figure 7 (qui sera détaillée dans la suite de la description), par exemple en fonction du nombre de tubes du circuit de refroidissement et/ou en fonction des positions d'entrée/sortie du fluide de refroidissement.

De préférence, le matériau d'enrobage peut être une résine ou tout matériau analogue. De ce fait, la résine peut être coulée sur place une fois l'assemblage monté. Ainsi, le contact entre le matériau d'enrobage et le corps de stator est optimal. De plus, la résine peut combler tout l'espace restant.

De manière avantageuse, le matériau d'enrobage peut être une résine époxy qui a de bonnes propriétés d'isolation électrique (rigidité diélectrique supérieur à 1 kV/mm) tout en assurant des propriétés de conductivité thermique suffisantes (conductivité thermique supérieure à 0,1 W/m.K).

De préférence, les tubes peuvent être répartis régulièrement tout autour du stator, et de préférence le circuit de refroidissement du stator comprend entre 4 et 30 tubes dans le corps de stator (et dans le matériau d'enrobage à chaque extrémité longitudinale du corps de stator). En multipliant le nombre de tubes autour du stator, dans le corps de stator, on peut obtenir une température le plus homogène possible dans le stator et notamment dans les bobines. De plus, multiplier le nombre de tube permet d'augmenter les capacités de refroidissement. Selon une configuration de l'invention, le corps de stator peut comprendre des bossages en saillie radiale et s'étendant dans la direction longitudinale pour le passage des tubes à travers le corps de stator. De ce fait, les bossages forment des excroissances du corps du stator en direction du carter, ces excroissances s'étendant sur toute la longueur du corps du stator. Les bossages sont avantageusement percés (les bossages comprennent des passages de tubes) pour la mise en place des tubes à l'intérieur de ces perçages. L'intérêt de ces bossages permet le refroidissement efficace par conduction thermique directement entre les tubes et le corps de stator. De plus, ces bossages permettent d'éviter un alourdissement inutile du corps de stator.

Selon une variante de l'invention, les tubes peuvent être frettés dans le corps de stator, de préférence dans les bossages du corps de stator. Ainsi, la mise en place industrielle des tubes est simple et peu onéreuse.

Selon d'autres variantes, les tubes pourraient être aussi soudés ou brasés au moins ponctuellement dans le corps de stator, de préférence dans les bossages du corps de stator.

Avantageusement, le circuit de refroidissement peut comprendre une seule entrée de fluide de refroidissement et une seule sortie de fluide de refroidissement. De ce fait, le fluide de refroidissement peut arriver par l'unique entrée dans le circuit de refroidissement, circule dans le circuit de refroidissement dans le stator, dans le matériau d'enrobage (à chaque extrémité longitudinale) jusque dans les flasques puis repasse à travers le matériau d'enrobage (à chaque extrémité longitudinale), le corps de stator pour arriver dans le matériau d'enrobage à l'autre extrémité puis au flasque à l'autre extrémité, ce une ou plusieurs fois en suivant un serpentin généré par les tubes et les canaux de liaison des flasques, puis il ressort de la machine électrique par l'unique sortie à une température plus élevée que celle à laquelle il est entré. Par une unique entrée et une unique sortie, le système est plus simple. De plus, il est ainsi plus facile de garantir des indices de protection aux poussières et/ou aux aspersions d'eau, tel que l'indice IP67 par exemple.

De préférence, un moyen de mise en circulation du fluide de refroidissement, tel qu'une pompe, peut être mis en place en amont de l'unique entrée pour commander la circulation du fluide de refroidissement.

Selon une variante, un moyen de contrôle du débit du fluide de refroidissement peut être utilisé. En effet, en augmentant le débit, on peut augmenter la capacité de refroidissement de la machine électrique. Le moyen de contrôle du débit peut par exemple être une vanne proportionnelle dont l'ouverture est contrôlée.

En sortie de la machine électrique, le fluide de refroidissement peut être refroidi par un moyen de refroidissement tel qu'un échangeur de chaleur par exemple avant d'être réintroduit plus froid en entrée de la machine électrique.

Selon une mise en oeuvre de l'invention, lorsque les canaux de liaison sont situés dans les flasques, la machine électrique peut comprendre un moyen d'étanchéité au niveau de chaque liaison entre un tube (traversant le corps de stator et le matériau d'enrobage) et un canal de liaison de manière à éviter toute fuite de fluide de refroidissement au sein de la machine électrique. Ces moyens d'étanchéité peuvent comprendre des joints toriques dont le matériau est adapté au fluide de refroidissement et aux conditions de pression/température.

Selon un mode de réalisation avantageux de l'invention, chaque canal de liaison situé dans un flasque pour la liaison entre deux tubes comprend deux trous longitudinaux dans le prolongement de chacun des deux tubes. Ainsi les tubes peuvent s'insérer dans les trous longitudinaux (qui peuvent disposer d'un alésage permettant l'insertion du tube) et un moyen d'étanchéité peut être positionné à l'interface (par exemple un joint torique peut être positionné dans une rainure réalisée dans le trou longitudinal). Les deux trous longitudinaux sont non débouchant : en d'autres termes, ils disposent d'une extrémité longitudinale et ne traversent pas totalement le flasque. Selon une alternative, les deux trous longitudinaux peuvent être débouchants et rebouchés par un bouchon de manière à empêcher la fuite du fluide de refroidissement vers l'extérieur de la machine électrique. De plus, le canal de liaison comprend un conduit rectiligne passant par les deux extrémités longitudinales des trous longitudinaux. Ainsi le canal de liaison permet au fluide de refroidissement arrivant par un des tubes reliés par le canal de liaison de rejoindre le deuxième tube. L'assemblage des différents tubes et des différents canaux de liaison forment un serpentin autour du stator et des têtes de bobines. De plus, le conduit rectiligne est dans un plan orthogonal à l'axe longitudinal et de préférence, tous les conduits rectilignes des canaux de liaison d'un même flasque sont coplanaires. Ainsi, il passe à proximité de l'extrémité longitudinale des têtes de bobines, ce qui permet d'améliorer le refroidissement des têtes de bobines, tout en assurant une réalisation simple et peu onéreuse du système de refroidissement.

Les canaux de liaison peuvent être réalisés par usinage dans les flasques par des perçages longitudinaux et des perçages de liaison dans un plan orthogonal à l'axe longitudinal, une partie du perçage pouvant être rebouchés pour éviter la fuite de fluide de refroidissement. Selon une alternative, les canaux de liaison pourraient être réalisés par impression 3D (fabrication additive).

Selon une mise en œuvre avantageuse de l'invention, la machine électrique peut comprendre un onduleur intégré et positionné sur le carter de la machine électrique. De ce fait, la machine électrique peut être alimentée par une source électrique continue, l'onduleur transformant alors le signal électrique continu en signal électrique alternatif adapté au fonctionnement de la machine électrique. De plus, cette architecture est compacte et permet une adaptation à un encombrement restreint comme dans un véhicule, ainsi qu'un éventuel système de refroidissement intégré, en effet, le fluide de refroidissement utilisé pour le refroidissement de la machine électrique peut également servir au refroidissement de l'onduleur.

Selon une mise en œuvre de l'invention, le corps de stator peut comprendre un empilement de tôles, les tôles étant de préférence métalliques. De ce fait, les pertes fer peuvent être réduites.

Avantageusement, les tubes peuvent être implantés sur un même diamètre d'implantation. En d'autres termes, ils sont tous équidistants de l'axe longitudinal de la machine électrique, ce qui permet un refroidissement homogène de la machine. De plus, cette architecture permet de simplifier la fabrication et le montage de l'ensemble.

De manière préférée, les tubes sont équitablement (régulièrement) répartis sur le diamètre d'implantation, de manière à encore améliorer le refroidissement homogène. Par exemple, si on a huit tubes répartis de manière régulière sur un même diamètre d'implantation, ces huit tubes sont répartis tous les 45°.

L'invention concerne plus particulièrement une machine électrique synchro-réluctante, de préférence une machine synchro-réluctante assistée d'aimants permanents. Une machine électrique synchro-réluctante comporte généralement un stator et un rotor disposés selon le même axe l'un dans l'autre. Le rotor est formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator. Ce rotor est généralement logé à l'intérieur d'un stator qui porte des bobinages électriques pour générer un champ magnétique permettant d'entrainer en rotation le rotor. Comme cela est mieux décrit dans le document EP 1 057 242, le stator est de forme annulaire et comprend une pluralité d'encoches radiales ouvertes en direction du rotor et qui s'étendent tout au long du pourtour du stator. Ces encoches sont prévues pour recevoir des bobinages d'induit qui sont introduits dans le stator par la face ouverte des encoches puis y sont fixés par tous moyens connus.

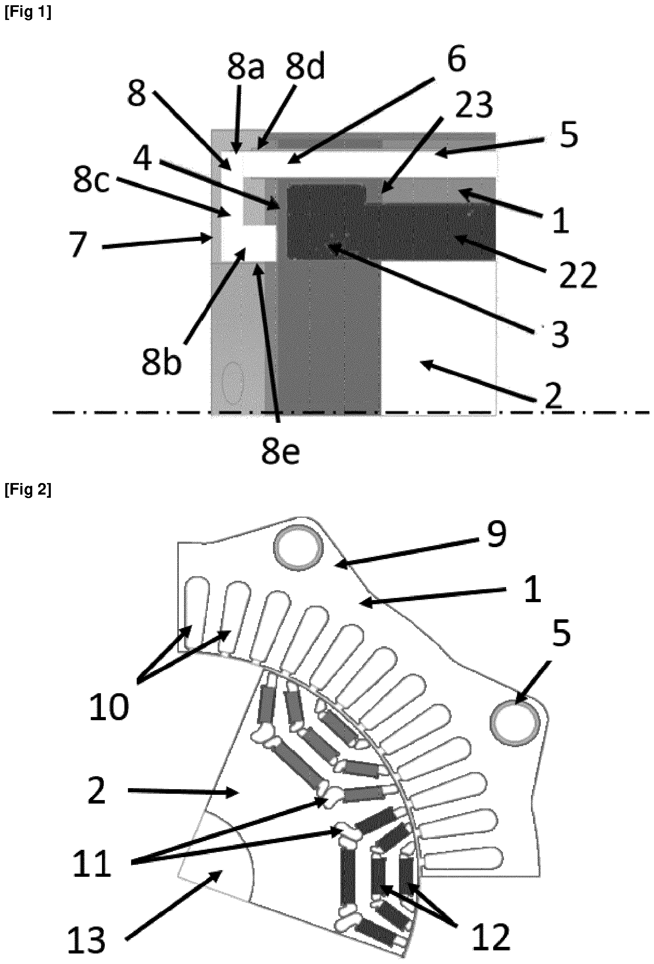

La figure 1 illustre, de manière schématique et non limitative une vue partielle en coupe dans un plan comprenant l'axe longitudinal d'une portion de la machine électrique selon un mode de réalisation de l'invention, l'axe longitudinal étant représenté par le trait mixte.

Sur cette figure, la machine électrique comprend un rotor 2 et un stator, le stator entourant le rotor. Le rotor 2 est mobile en rotation autour de l'axe longitudinal (par exemple, il peut être entraîné par un arbre non représenté), le stator étant fixe.

Le stator comprend un corps de stator 1 qui peut être constitué d'un empilage de tôles, et de bobines 22. Les bobines 22 comprennent des têtes de bobines 3 qui dépassent de part et d'autre des extrémités longitudinales 23 du corps de stator 1. Sur la figure, une seule extrémité longitudinale 23 est représentée mais il est évident que le corps de stator 1 comprend une autre extrémité longitudinale et que les bobines 22 comprennent des têtes de bobines dépassant de l'autre extrémité longitudinale, de manière symétrique par rapport à un plan orthogonal à l'axe longitudinal.

Les bobines 22 sont enroulées autour du corps de stator 1 qui comprend des ouvertures pour permettre leur enroulement.

Les têtes de bobines 3 sont noyées (enrobées, enveloppées) dans un matériau d'enrobage 4 tel qu'une résine, par exemple une résine époxy, de manière à éviter ou limiter les vibrations qui pourraient endommager les têtes de bobines 3 et de manière à favoriser l'échange thermique avec les têtes de bobines 3. En d'autres termes, un matériau d'enrobage 4 entoure (ou enveloppe) les têtes de bobines 3. Bien entendu, un matériau d'enrobage du même type entoure les têtes de bobines situé à l'autre extrémité longitudinale du corps de stator (non représenté).

L'enveloppe de la machine électrique comprend un boitier, aussi appelé carter, (de forme sensiblement cylindrique non représenté) et deux flasques 7, un à chaque extrémité longitudinale de la machine électrique (un seul flasque 7 est représenté pour simplifier la représentation).

Le flasque 7 est en contact du matériau d'enrobage 4 pour permettre une meilleure conduction de la chaleur générée par les têtes de bobines 3 et donc faciliter leur refroidissement.

De plus, des tubes 5 traversent longitudinalement (le long d'un axe parallèle à l'axe longitudinal) le corps de stator 1 et les matériaux d'enrobage 4, à chaque extrémité longitudinale du corps de stator. Ainsi, les tubes 5 sont intégrés à la fois dans le corps de stator 1 et dans les matériaux d'enrobage 4 tout en les traversant totalement longitudinalement, de manière à venir en contact avec les flasques 7. Dans les tubes 5, peut circuler un fluide de refroidissement 6 comme de l'eau. Par l'architecture spécifique de l'invention, le fluide de refroidissement passe à travers le corps de stator 1 et à travers les matériaux d'enrobage 4 passant donc très près des têtes de bobines 3. Cette configuration permet une évacuation efficace de la chaleur générée par le stator et plus particulièrement par les têtes de bobines 3. De plus, comme les tubes 5 traversent les matériaux d'enrobage (de part et d'autre), ils viennent en contact avec les flasques 7, en contact avec l'air extérieur, ce qui permet encore d'augmenter le refroidissement de la machine électrique.

De manière à permettre la circulation du fluide de refroidissement 6 d'un tube 5 à un autre tube 5, des canaux de liaison 8 sont prévus dans les flasques 7 pour assurer la liaison fluidique.

Ces canaux de liaison 8 peuvent notamment comprendre deux trous longitudinaux 8a et 8b coaxiaux chacun à un tube 5 auquel le canal de liaison est relié. Ces trous longitudinaux 8a et 8b ne traversent pas le flasque longitudinalement. Autrement dit, ces trous longitudinaux sont non débouchant et ils sont reliés l'un avec l'autre par un conduit rectiligne 8c passant par les extrémités longitudinales de ces deux trous longitudinaux 8a et 8b. Comme on peut le voir sur la figure, le conduit rectiligne 8c passe tout près de l'extrémité longitudinale des têtes de bobines 3. Ainsi, le circuit de refroidissement selon l'invention, passe au plus près des têtes de bobines 3 aussi bien sur toute leur longueur longitudinale que sur le côté de l'extrémité longitudinale, ce qui favorise le refroidissement avec un circuit de refroidissement simple. Pour faciliter l'assemblage de l'ensemble, les tubes 5 peuvent s'insérer dans les flasques 7 grâce à des alésages 8d, 8e réalisés dans les flasques 7, les alésages 8d, 8e étant adaptés au diamètre extérieur des tubes 5.

Les flasques 7 peuvent par exemple être réalisés par usinage. Alternativement, ils pourraient être fabriqués par fabrication additive.

Au niveau de la liaison entre les tubes 5 et les flasques 7, un moyen d'étanchéité peut être prévu pour éviter les risques de fuite de fluide de refroidissement. Pour ce faire, le moyen d'étanchéité peut comprendre par exemple un joint torique adapté au fluide de refroidissement et aux températures et pressions de fonctionnement.

Pour l'assemblage, les tubes 5 peuvent être frettés, soudés ou brasés dans le corps de stator 1. Les tubes peuvent aussi être reliés au corps de stator par une pâte conductrice. On peut ensuite positionner les flasques 7 puis on peut insérer les matériaux d'enrobage 4, les matériaux d'enrobage 4 étant alors mis en place sous forme liquide, à l'emplacement prévu. Lorsque le matériau d'enrobage 4 s'est durcit (solidifié), le matériau d'enrobage forme un ensemble solide entre le corps de stator 1 et le flasque 7 considéré, tout autour des têtes de bobines 3.

La figure 2 illustre, de manière schématique et non limitative, une vue en coupe dans un plan orthogonal à l'axe longitudinal de la machine électrique, d'une partie du rotor et du stator de la machine électrique selon un mode de réalisation de l'invention.

Le rotor 2 est positionné au centre et le stator entoure le rotor 2. Le rotor 2 comprend un alésage central 13 pour le passage d'un arbre (non représenté) qui peut entraîner le rotor 2 en rotation ou qui peut être entraîné en rotation par le rotor 2.

Le stator comprend un corps de stator 1 et des bobines (non représentées). Le corps de stator 1 comprend des ouvertures 10 avec des voiles radiaux séparant ces ouvertures. Ainsi, les bobines peuvent entourer les voiles radiaux en passant dans les ouvertures 10 de part et d'autre des voiles radiaux.

Le corps de stator 1 comprend des bossages 9 qui s'étendent dans la direction longitudinale (dans la direction orthogonale au plan de coupe de la figure). Ainsi, le corps de stator 1 ne dispose pas d'une enveloppe externe cylindrique. Ces bossages 9 forment des parties en saillie dirigées vers l'extérieur de la machine électrique. A l'intérieur de chacun de ces bossages 9, se trouve un alésage dont le diamètre permet le passage des tubes 5. Les tubes 5 sont donc insérés dans les bossages 9. L'ajout de ces bossages 9 permet de positionner les tubes 5 au plus près des bobines situées dans les ouvertures 10, et ce dans le stator, de manière à assurer une très bonne conductivité thermique des bobines aux tubes 5. Cela est notamment le cas lorsque le matériau du corps de stator 1 est un très bon conducteur thermique, comme le cuivre.

La machine électrique représentée sur cette figure est une machine synchro réluctante. Le rotor 2 de cette machine synchro-réluctante comprend des évidements 11 formant les barrières de flux s'étendant dans la direction longitudinale (orthogonale au plan de coupe de la figure) du rotor.

Le rotor 2 dispose de plusieurs pôles magnétiques, composés chacun d'aimants permanents 12. Les aimants de chaque paire de pôle sont positionnés dans des logements s'étendant dans une direction perpendiculaire à l'axe de symétrie du logement, l'axe de symétrie étant radial. Les logements des aimants de la même paire de pôles ont le même axe de symétrie. De chaque côté des aimants permanents, des évidements 11 s'étendent depuis l'extrémité du logement jusqu'à la périphérie du rotor 2. Ainsi, chaque pôle magnétique dispose ici de six évidements. Chacun des évidements 11 suit une direction inclinée par rapport à la direction radiale. Dans les évidements 11, on peut également positionner des aimants supplémentaires.

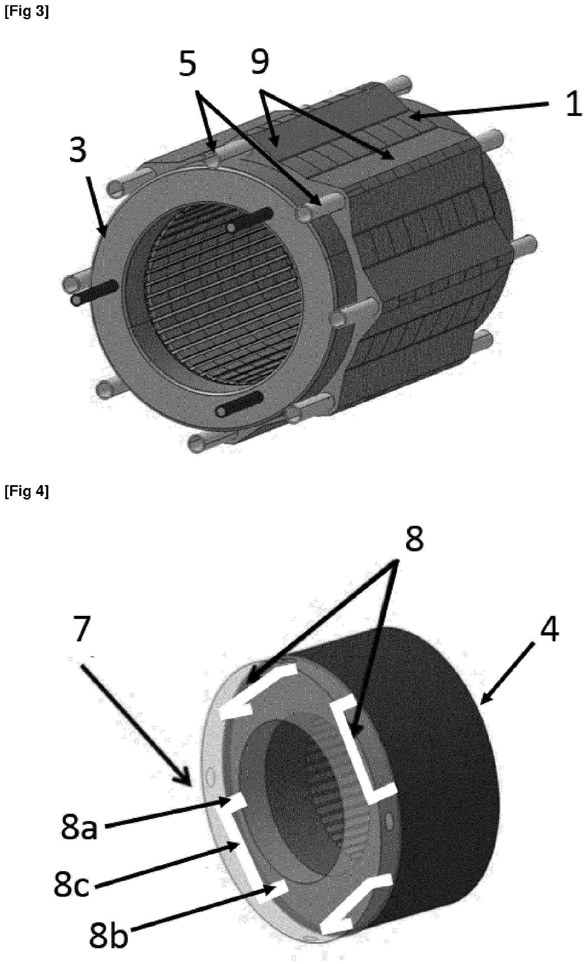

La figure 3 illustre, de manière schématique et non limitative, une vue en perspective du stator et des tubes 5 d'une machine électrique selon un mode de réalisation l'invention.

Le corps de stator 1 est composé d'un empilage de tôles. L'enveloppe extérieure du corps de stator 1 n'est pas cylindrique mais comprend des bossages 9 s'étendant dans la direction longitudinale sur toute la longueur du corps de stator 1. Dans chacun de ces bossages 9, est inséré un tube 5 pour le passage du fluide de refroidissement. Ces bossages 9 forment des excroissances du corps de stator, solidaires avec le corps de stator et d'un même matériau. En d'autres termes, les tôles de l'empilage comprennent chacune des excroissances dans les zones des bossages 9. Les tubes 5 sont reclignes et orientés dans une direction parallèle à l'axe longitudinal, ce qui facilite la réalisation des tubes et leur assemblage pour former la machine électrique.

Les têtes de bobines 3 dépassent de l'extrémité longitudinale du corps de stator 1. Les tubes 5 sont plus longs que le corps de stator 1. La longueur des tubes est en effet supérieure à la somme de la longueur (dans la direction longitudinale) du corps du stator 1 et de deux fois la longueur (dans la direction longitudinale) de dépassement des têtes de bobines 3 du corps de stator 1. Ainsi, les tubes permettent un refroidissement sur toute la longueur longitudinale du stator, y compris sur la totalité de la longueur des têtes de bobines 3 et ce à chaque extrémité longitudinale. De plus, une sur-longueur des tubes 5 est prévu pour être inséré, de chaque côté, dans les flasques 7 afin de faciliter le montage et assurer le guidage des tubes et leur étanchéité.

La figure 4 illustre, de manière schématique et non limitative, une vue en perspective d'un flasque 7 (en vue transparente) et du matériau d'enrobage 4 juxtaposés au flasque 7 d'une machine électrique selon un mode de réalisation de l'invention.

A l'intérieur du matériau d'enrobage 4, sont positionnés des tubes (non visibles) qui traversent le matériau d'enrobage 4 sur toute sa longueur longitudinale de manière à assurer une liaison fluidique depuis le corps de stator jusqu'au flasque 7. Ici, huit tubes longitudinaux sont utilisés. Comme expliqué, le flasque 7 est représenté en transparence de manière à permettre la visualisation des usinages internes (bien-entendu, même si on parle ici d'usinage, ces conduits pourraient être réalisés par d'autres moyens comme de la fabrication additive).

Comme on peut le voir, le flasques comprend quatre canaux de liaison, chacun permettant la connexion fluidique entre deux tubes longitudinaux traversant le corps de stator et le matériau d'enrobage 4.

Chacun de ces canaux de liaison comprend deux trous longitudinaux 8a, 8b et un conduit 8c qui relie les deux extrémités longitudinales des trous longitudinaux 8a, 8c, qui sont non débouchant (ils ne traversent pas le flasque 7). Les conduit 8c sont rectilignes et se trouvent dans un plan orthogonal à l'axe longitudinal. Ces conduits 8c d'un même flasque 7 sont coplanaires. Ils se dirigent dans une direction perpendiculaire au plan de symétrie séparant les deux tubes que le canal de liaison relie.

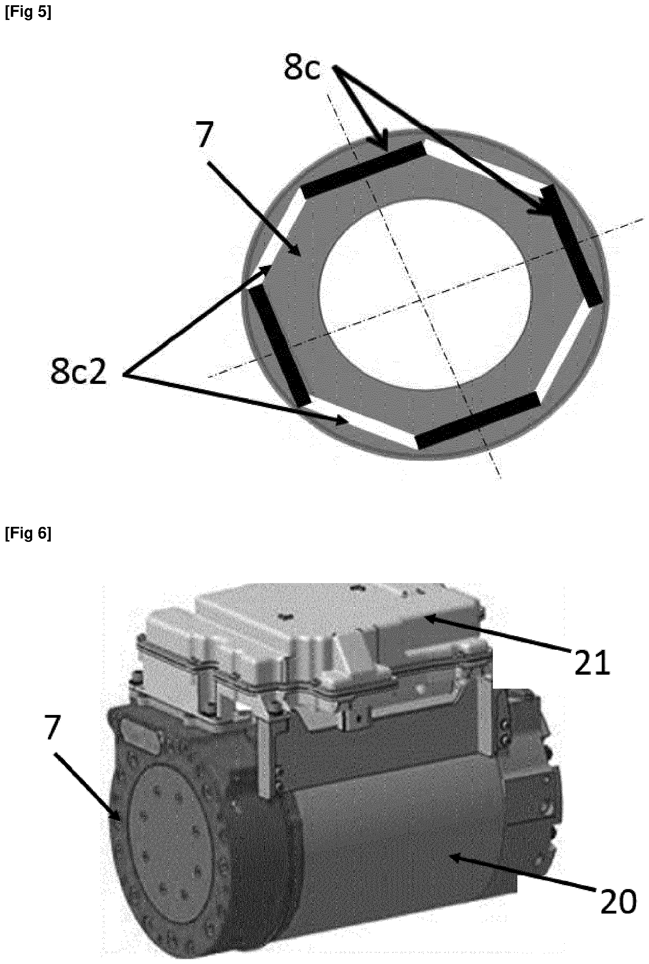

La figure 5 illustre, de manière schématique et non limitative une vue en coupe d'un flasque 7 dans un plan orthogonal à l'axe longitudinal d'une machine électrique selon un mode de réalisation de l'invention.

Dans le flasque 7, on observe les conduits 8c des canaux de liaisons rejoignant les deux trous longitudinaux (non représentés dans ce plan en coupe). Ces conduits 8c d'un même flasque 7 sont coplanaires et s'étendent chacun dans une direction orthogonale aux plans séparant les tubes longitudinaux, ces plans étant matérialisés sur la figure par les traits mixtes.

Pour que le circuit de refroidissement puisse faire un serpentin à travers les tubes et les canaux de liaison, les canaux de liaison de l'autre flasque sont décalés. Sur la figure 5, on a représenté en blanc les canaux 8c2 du flasque opposé de manière à faciliter la compréhension du lecteur. Ainsi, les canaux de liaison relient chacun deux tubes qui se succèdent sur la circonférence sur laquelle sont implantés les tubes longitudinaux, les canaux de liaison étant successivement positionnés dans un flasque puis dans l'autre, selon la circulation du fluide de refroidissement dans le circuit de refroidissement.

La figure 6 illustre, de manière schématique et non limitative, un exemple de machine électrique selon un mode de réalisation de l'invention.

La machine électrique comprend une enveloppe externe comprenant un boîter (carter) 20, sensiblement cylindrique et deux flasques 7, les flasques 7 étant chacun positionnés à une extrémité longitudinale du boîtier 20 de manière à assurer la protection des personnes vis-à-vis des pièces en mouvement et/ou sous tension électrique et à permettre une protection de la machine vis-à-vis des poussières et/ou des aspersions de liquides, notamment d'eau.

Sur le boîtier 20, est positionné un onduleur 21 apte à transformer le signal d'entrée (tension continue par exemple) en signal permettant le fonctionnement de la machine électrique (tension alternative par exemple). En positionnant l'onduleur 21 au plus près de la machine électrique, la machine électrique est compacte. Cela est particulièrement avantageux lorsque la machine électrique est utilisée dans un véhicule, tel qu'une automobile, où l'encombrement est généralement réduit.

La figure 7 représente, de manière schématique et non limitative, un exemple de circuit de refroidissement, seul, d'une machine électrique selon un mode de réalisation l'invention. Cette figure permet de mieux comprendre le cheminement du circuit à travers les tubes et les canaux de liaison et la circulation du fluide de refroidissement dans ce circuit de refroidissement.

Le circuit de refroidissement, composé des tubes 5 et des canaux de liaison 8 situés dans les flasques, comprend une (unique) entrée 24 et une (unique) sortie 25. Telles que représentées sur la figure, l'entrée 24 et la sortie 25 sont dans un même flasque mais elle pourrait être dans deux flasques différents et/ou l'une d'entre elles pourraient passer à travers le boîtier (carter) de la machine électrique, comme représenté à la figure 6. L'entrée 24 et la sortie 25 s'étendent radialement vers le haut mais pourraient tout aussi bien s'étendre radialement dans d'autres directions ou bien s'étendre longitudinalement pour sortir longitudinalement par le/les flasque(s). Par ailleurs, même si cette solution n'est pas préférée, le circuit de refroidissement pourrait comprendre plusieurs entrées et/ou plusieurs sorties reliées à un seul circuit. Selon une autre variante, le circuit de refroidissement pourrait comprendre plusieurs morceaux de circuit indépendants, chacun comprenant une entrée et une sortie.

Sur la figure, le circuit de refroidissement comprend huit tubes 5 longitudinaux passant à travers le corps de stator et les matériaux d'enrobage de part et d'autre du corps de stator. Ces huit tubes 5 s'étendent longitudinalement et sont positionnés sur un cercle. En d'autres termes, les huit tubes 5 sont à égale distance de l'axe longitudinal de la machine électrique. De plus, les huit tubes 5 sont équitablement répartis sur la circonférence de ce cercle de manière à assurer un refroidissement homogène sur tout le stator. Ainsi, les tubes 5 sont situés tous les 45°.

A une première extrémité longitudinale 100, les extrémités des tubes 5 se trouvent sur le cercle 26 et à l'autre extrémité longitudinale 101, les extrémités des tubes 5 se trouvent sur le cercle 26b qui a le même diamètre que le cercle 26 et qui est coaxial avec lui.

Sur la circonférence du stator, on trouve ainsi successivement plusieurs tubes 5. Les extrémités de deux tubes successives, dans la direction circonférentielles, sont connectées par des canaux de liaison dans un flasque ou dans l'autre, de manière alternative.

Par exemple, les tubes 51, 52 et 53 sont trois tubes successifs dans la direction circonférentielle. Les tubes 51 et 52 qui sont successifs se rejoignent par un canal de liaison du flasque positionné à l'extrémité longitudinale 100 alors que les tubes 52 et 53 qui sont également successifs se rejoignent dans un canal de liaison du flasque positionné à l'extrémité 101. Par ces liaisons successives des tubes 5 par des canaux de liaison dans un flasque puis dans l'autre, de manière alternative, le circuit de refroidissement forme un serpentin autour du stator, en passant au plus près des têtes de bobines, sur toute leur longueur et sur leur extrémité longitudinale.

Ainsi, les canaux de liaison 8 d'un flasque sont décalés des canaux de liaison 8 de l'autre flasque d'un angle correspondant à l'angle séparant les tubes 5 sur leur diamètre d'implantation (diamètre des cercles 26 et 26b).

A l'extrémité longitudinale 100, le flasque comprend quatre canaux de liaison permettant de relier deux à deux, les huit tubes. En effet, dans la direction circonférentielle et dans le sens de la flèche F, le premier tube considéré étant le tube 51, les quatre canaux de liaison 8 du flasque de l'extrémité longitudinale 100, permettent respectivement de relier le premier tube 51 et le deuxième tube 52, le troisième et le quatrième tube, le cinquième et le sixième tube, le septième et le huitième tube, les numéros des tubes correspondant à leur numéro d'itération dans la direction circonférentielle et dans le sens F.

A l'autre extrémité longitudinale 101, le flasque comprend trois canaux de liaison permettant de relier deux à deux, six tubes, les tubes d'extrémités (le premier tube 51 et le dernier) étant connectés respectivement à l'entrée 24 et à la sortie 25. En effet, dans la direction circonférentielle et dans le sens de la flèche F, les trois canaux de liaison 8 du flasque de l'extrémité longitudinale 101 permettent respectivement de relier le deuxième tube 52 et le troisième tube 53, le quatrième tube et le cinquième, le sixième tube et le septième.

Ainsi, par les liaisons successives des tubes 5 par les canaux de liaison 8 des deux flasques, le circuit de refroidissement forme un serpentin sur tout le pourtour du stator et dans les flasques.

### Exemple

Le circuit de refroidissement selon l'invention a été mis en place et testé dans une machine électrique alimentée par une tension continue de 400V, un onduleur permettant la transformation du signal d'entrée continu en signal alternatif compatible avec le fonctionnement de la machine électrique. La machine électrique a les caractéristiques suivantes :
- Couple continu de 200N.m sur 1800s ;
- Couple maximal de 350Nm pendant 30s ;
- Puissance continue de 90 kW sur 1800s ;
- Puissance maximale de 149 kW sur 30s
- Vitesse maximale de rotation 8000 tours/minute.

Le liquide de refroidissement est de l'eau dont la température en entrée du circuit de refroidissement est de 50°C+/-2°C pour les essais en couple ou en puissance continus (pendant 1800s) et de 65°C +/-2°C pour les essais en couple ou puissance maximaux (pendant 30s). Le débit de refroidissement est de 12 L/min +/-2L/min.

L'objectif de ces essais est de vérifier la tenue thermique de la machine électrique et de l'onduleur sur des points stabilisés pendant 30s et 1800s. La Figure 8 présente la courbe d'évolution de la température C2 des têtes de bobines de la machine électrique sur un point stabilisé de 30 sec à couple maximal de la machine électrique (350 Nm), la courbe d'évolution du couple en fonction du temps étant représentée par la courbe C3, la courbe C1 présentant l'évolution de l'intensité du courant dans les phases de la machine électrique. Sur cette figure, l'abscisse T en seconde (s) représente le temps, les ordonnées Temp représente la température en °C et C/A correspond au couple (pour C en Nm) et à l'intensité du courant (pour A en Ampère). On constate que l'échauffement des bobines à couple maximal pendant 30s reste raisonnable. La température des bobines atteint 120°C à la fin de l'essai pour une température maximale acceptable de 180°C.

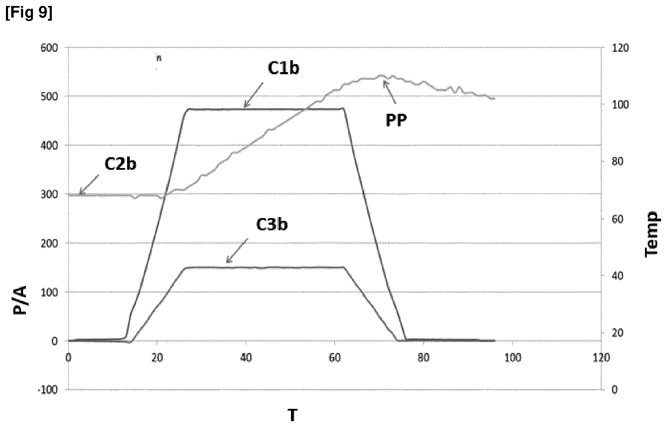

La Figure 9 présente la courbe d'évolution C2b de la température des têtes de bobine sur un point stabilisé de 30 secondes à puissance maximale de la machine électrique (149kW). La courbe d'évolution de la puissance en fonction du temps étant représentée par la courbe C3b, la courbe C1b présentant l'évolution de l'intensité du courant dans les phases de la machine électrique. Sur cette figure, l'abscisse T en seconde (s) représente le temps, les ordonnées Temp représente la température en °C et P/A correspond à la puissance (pour P en kW) et à l'intensité du courant (pour A en Ampère). On peut constater que l'échauffement des bobines de la machine électrique à puissance maximale pendant 30s reste raisonnable. La température maximale PP des bobines atteint 110°C à la fin de l'essai pour une température maximale acceptable de 180°C pour les bobines et de 155°C pour le matériau d'enrobage (ici une résine époxy semi rigide bi-composants). Le rendement de la machine électrique est compris entre 94 à 96% dans la gamme normale de fonctionnement, ce qui témoigne de bonnes performances électromagnétique et thermique du moteur. Cela permet de montrer, de manière surprenante, que le circuit de refroidissement de l'invention, simple et peu onéreux, permet un très bon fonctionnement de la machine électrique.

## Revendications

1. Machine électrique comprenant un rotor (2) et un stator coaxiaux autour d'un axe longitudinal, un carter (20) et deux flasques (7), les deux flasques (7) étant positionnés chacun à une extrémité longitudinale du carter (20) et formant avec le carter une enveloppe extérieure de la machine électrique, le stator entourant le rotor (2), le stator comprenant un corps de stator (1) et des bobines (22) avec des têtes de bobines (3), les têtes de bobines (3) étant enrobées d'un matériau d'enrobage (4), tel qu'une résine, remplissant un espace annulaire entre le corps de stator (1) et un des deux flasques (7), la machine électrique comprenant un circuit de refroidissement du stator au moyen de la circulation d'un fluide de refroidissement (6), **caractérisé en ce que** le circuit de refroidissement du stator comprend des tubes (5) traversant longitudinalement le corps de stator (1) et le matériau d'enrobage (4) des têtes de bobines (3), les tubes (5) étant reliés entre eux par des canaux de liaison (8) de manière à ce que le circuit de refroidissement forme un serpentin autour du stator et des têtes de bobines (3).

2. Machine électrique selon la revendication 1, pour lequel les tubes (5) sont répartis régulièrement autour du stator, et de préférence le circuit de refroidissement du stator comprend entre 4 et 30 tubes (5) dans le corps de stator (1).

3. Machine électrique selon la revendication 1 ou 2, pour lequel le corps de stator (1) comprend des bossages (9) s'étendant dans la direction longitudinale pour le passage desdits tubes (5) à travers ledit corps de stator (1).

4. Machine électrique selon l'une des revendications précédentes, pour lequel les tubes (5) sont frettés dans le corps de stator (1).

5. Machine électrique selon l'une des revendications précédentes pour lequel le circuit de refroidissement comprend une seule entrée (24) de fluide de refroidissement et une seule sortie (25) de fluide de refroidissement.

6. Machine électrique selon l'une des revendications précédentes, pour laquelle les canaux de liaison (8) sont situés dans les flasques (7) et pour laquelle la machine électrique comprend de préférence un moyen d'étanchéité au niveau de chaque liaison entre un tube (5) et un canal de liaison (8) dans les flasques (7), le moyen d'étanchéité comprenant de préférence un joint torique.

7. Machine électrique selon la revendication 6, pour lequel chaque canal de liaison (8) dans un flasque (7) pour la liaison entre deux tubes (5) comprend deux trous longitudinaux (8a, 8b) dans le prolongement de chacun desdits deux tubes (5) et un conduit rectiligne (8c) passant par les deux extrémités des trous longitudinaux, les deux trous longitudinaux étant non débouchant.

8. Machine électrique selon l'une des revendications précédentes comprenant un onduleur intégré (21) et positionné sur le carter (20) de la machine électrique.

9. Machine électrique selon l'une des revendications précédentes, pour lequel le corps de stator (1) comprend un empilement de tôles.

10. Machine électrique selon l'une des revendications précédentes, la machine électrique étant une machine synchro-réluctante, de préférence une machine synchro-réluctante assistée d'aimants permanents (12).
